**Europäisches Patentamt**

**European Patent Office**

**Office européen des brevets**

(11) Veröffentlichungsnummer : **0 357 897 B1**

# (12) EUROPÄISCHE PATENTSCHRIFT

(45) Veröffentlichungstag der Patentschrift :
**06.05.92 Patentblatt 92/19**

(21) Anmeldenummer : **89111642.8**

(22) Anmeldetag : **27.06.89**

(51) Int. Cl.⁵ : **B01D 53/04**

(54) **Einrichtung zum fortlaufenden Reinigen lösungsmittelhaltiger Abluft.**

(30) Priorität : **31.08.88 CH 3250/88**

(43) Veröffentlichungstag der Anmeldung :
**14.03.90 Patentblatt 90/11**

(45) Bekanntmachung des Hinweises auf die
Patenterteilung :
**06.05.92 Patentblatt 92/19**

(84) Benannte Vertragsstaaten :
**CH DE IT LI**

(56) Entgegenhaltungen :
**EP-A- 0 019 879**
**DE-C- 515 296**
**GB-A- 2 006 041**
**US-A- 2 195 565**

(73) Patentinhaber : **MEIER, René**
**Reckenbühlstrasse 21**
**CH-6005 Luzern (CH)**

(72) Erfinder : **MEIER, René**
**Reckenbühlstrasse 21**
**CH-6005 Luzern (CH)**

(74) Vertreter : **Reichmuth, Hugo Werner**
**INVENTIO AG Seestrasse 55**
**CH-6052 Hergiswil/NW (CH)**

EP 0 357 897 B1

## Beschreibung

Die Erfindung betrifft eine Einrichtung zum fortlaufenden Reinigen von lösungsmittelhaltiger Abluft mit einem regenerierbaren Aufnahmemittel und zum Abgeben von Reinluft an die Atmosphäre, zum Regenerieren des Aufnahmemittels und zum Rückgewinnen des Lösungsmittels mit zwei parallelgeschalteten, das Aufnahmemittel enthaltenden Aufnahmetürmen, mit je mindestens einem Mikrowellengenerator, den nötigen Leitungen und Ventilen, einer Vakuumpumpe und einem Kondensator.

In einer CH-Patentanmeldung Nr. 04 500/87-6 des gleichen Erfinders wird ein Verfahren und eine Einrichtung zum fortlaufenden Reinigen lösungsmittelhaltiger Abluft, beispielsweise Industrieabluft, bei gleichzeitiger Rückgewinnung der Lösungsmittel beschrieben. Bei diesem Verfahren und dieser Einrichtung wird in zwei, durch Rohre hintereinandergeschalteten Adsorptionstürmen ein handelsübliches Adsorptionsmittel eingesetzt, welches Wasser wegen seiner grossen Polarität bevorzugt adsorbiert und bei welchem eventuell bereits sorbierte Substanzen niedriger Polarität, wie z.B. Lösungsmittel, durch das Wasser verdrängt werden. Durch dieses Adsorptionsmittel wird die Industrieabluft in einer Richtung hindurchgeführt, der Abluft die Verunreinigungen entzogen und die gereinigte Abluft an die Umwelt abgegeben. Um eine saubere Trennung zwischen dem angelagerten Wasser und den verdrängten Lösungsmitteln zu erhalten, ist am Ende des ersten Adsorptionsturmes ein Feuchtigkeitsfühler angeordnet. Sobald der erste Adsorptionsturm mit Feuchtigkeit gesättigt ist, spricht der Feuchtigkeitsfühler an und setzt die Anlage still, bzw. schaltet eine gleiche Parallelanlage für einen fortlaufenden Reinigungsbetrieb ein. Gleichzeitig mit der Sättigung des ersten Adsorptionsturmes mit Feuchtigkeit sind im zweiten Adsorptionsturm alle verdrängten Schadstoffe niedriger Polarität angelagert. Durch eine entsprechende Umschaltung wird durch den ersten Adsorptionsturm in der Gegenrichtung trockene Warmluft hindurchgeführt, welche die im Adsorptionsmittel angelagerte Feuchtigkeit aufnimmt und als feuchte Wärme an die Umwelt abgeht. Die im zweiten Adsorptionsturm angelagerten Lösungsmittel werden durch einen von einer Vakuumpumpe erzeugten Gegenstrom unter Mithilfe eines Mikrowellengenerators bei niedriger Temperatur verdampft und durch Kondensation in flüssiger Form zurückgewonnen. Während dieser Regenerierungsphase läuft die Parallelanlage in der Reinigungsphase, bis auch bei dieser der Feuchtigkeitsfühler anspricht. Beide Anlagen werden wieder in ihre Ausgangsphase umgeschaltet und der beschriebene Vorgang wiederholt sich.

Ein Nachteil dieses Verfahrens und dieser Anlage liegt darin, dass für einen ununterbrochenen Betrieb eine Einrichtung benötigt wird, welche mindestens zwei Paare mit je zwei hintereinandergeschalteten Adsorptionstürmen, also total vier Adsorptionstürme aufweist, um gleichzeitig eine Adsorptionsphase und eine Desorptionsphase durchführen zu können.

Der Erfindung liegt die Aufgabe zugrunde, eine Einrichtung zum Reinigen lösungsmittelhaltiger Abluft und zum Rückgewinnen der Lösungsmittel vorzuschlagen, welche ebenfalls ohne Unterbrechung arbeitet, aber wirtschaftlicher und weniger aufwendig ist.

Diese Aufgabe wird durch die im Anspruch 1 gekennzeichnete Erfindung gelöst.

Die durch die Erfindung erreichten Vorteile sind im wesentlichen darin zu sehen, dass durch den Einsatz eines Aufnahmemittels, welches Substanzen niedriger Polarität, beispielsweise Lösungsmittel, bevorzugt aufnimmt, nur noch ein Aufnahmeturm benötigt wird, bzw. für einen fortlaufenden Betrieb mit Adsorptions- und Desorptionsphase deren zwei benötigt werden. Durch die Anordnung eines mikrowellenneutralen geschlossenen Behälters im Innern des Verdampfers wird in der Desorptionsphase durch das gebildete Vakuum um den Behälter allseitig automatisch eine kostengünstige Isolationsschicht gebildet, in der sich auch die Mikrowellen besser verteilen. Unabhängig von der Aussentemperatur stellt sich dadurch eine Leistungssteigerung ein. Der teilweise aggressive Lösungsmittelabdampf kommt nicht mehr mit einer Wandung des Aufnahmeturmes in Berührung, so dass der Aufnahmeturm nach rein statischen Grundsätzen aus gewöhnlichem Stahlblech gefertigt werden kann.

Auf beiliegender Zeichnung ist ein Ausführungsbeispiel der Erfindung dargestellt, das im folgenden näher erläutert wird.

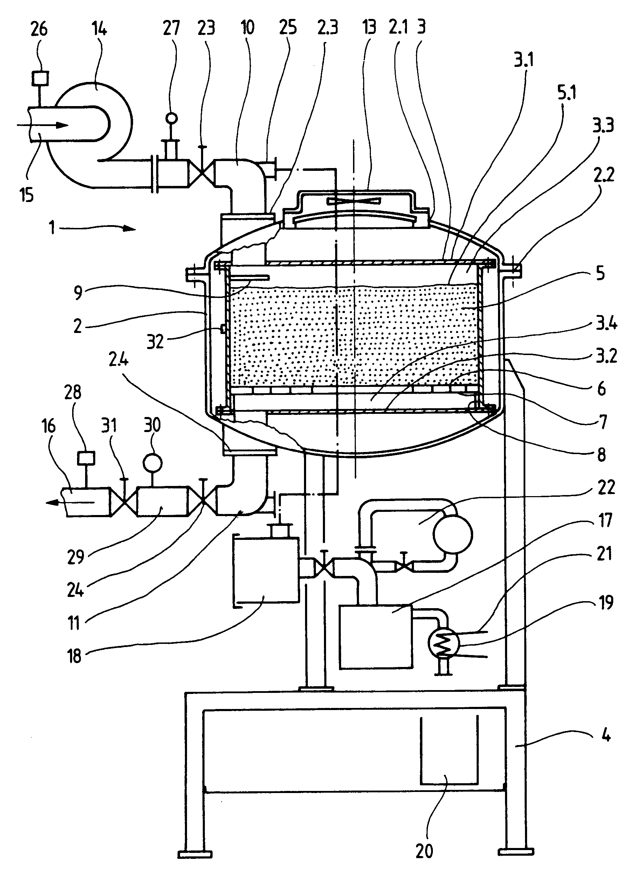

Die Figur zeigt eine schematische Schnittzeichnung durch den Aufnahmeturm im Aufriss.

In der Figur ist mit 1 ein Aufnahmeturm bezeichnet. Mit einem Ansaugrohr 15 wird Industrieabluft über den Ansaugstutzen 10 in den Aufnahmeturm 1 geleitet. Ein Ventilator 14 fördert die Industrieabluft durch den Aufnahme- oder Reinigungsturm 1 und gereinigte Abluft über einen Ausblasstutzen 11, ein Ausblasrohr 16 und ein nicht dargestellter Kamin an die Umwelt. Der Aufnahmeturm besteht aus einem Verdampfergehäuse 2 und einem geschlossenen Verdampferbehälter 3. Der Anschlussstutzen 10 und der Ausblasstutzen 11 münden direkt in den durch einen oberen und einen unteren aufgeschraubten Deckel 3.1, 3.2 verschlossenen Verdampferbehälter 3. Der Ansaugstutzen 10, der Ausblasstutzen 11, der Verdampferbehälter 3 und die Deckel 3.1, 3.2 sind aus mikrowellenneutralem Kunststoff gefertigt, während das Verdampfergehäuse 2 mit dem Verdampfergehäusedeckel 2.1 aus gewöhnlichem Stahlblech hergestellt ist. Zwischen dem Verdampfergehäuse 2 und dem Verdampfergehäusedeckel 2.1 ist eine Deckeldichtung 2.2 und zwischen dem Ansaugstutzen 10 bzw. dem Ausblasstutzen 11 und dem Verdampfergehäusedeckel 2.1 bzw. dem Verdampfergehäuse 2 sind Stutzendichtungen 2.3 und 2.4 vorgesehen. Der Verdampferbehälter 3 weist einen oberen Freiraum 3.3 und einen unteren Freiraum 3.4 auf. Der untere Freiraum 3.4 wird durch einen Stützring 8, eine Lochplatte 7 und ein Feinsieb 6 gebildet, während der obere Freiraum 3.3 dadurch entsteht, dass das obere Niveau 5.1 eines in den Verdampferbehälter 3 eingefüllten Aufnahmemittels 5, beispielsweise einer Harzfüllung, zum Aufnehmen der in der Industrieabluft enthaltenen Lösungsmitteldämpfe nicht bis zum oberen Deckel 3.1 des Verdampferbehälters 3 ragt. Zwischen diesem Niveau 5.1 und dem Eintritt des Ansaugstutzens 10 in den Verdampferbehälter 3 ist ein Prallblech 9 angeordnet, damit die Oberfläche des Aufnahmemittels 5 im Bereich des Eintrittes des Ansaugstutzens 10 nicht verblasen wird. Für die Desorption des Aufnahmemittels 5 ist unter oder seitlich neben dem Aufnahmeturm 1, je nach den vorhandenen Platzverhältnissen, eine Vakuumpumpe 17, ein Luftfilter 18, ein Kondensator 19 mit den nötigen Anschluss- und Verbindungsleitungen, eine Kühlwasserleitung 21 und ein Kondensat-Auffangbehälter 20 angeordnet. Am Deckel 2.1 des Verdampfergehäuses 2 ist mindestens ein Mikrowellengenerator 13 angebaut. An verschiedenen Stellen der Einrichtung sind Überwachungs- und Steuerungseinrichtungen eingebaut: Im Ansaugrohr 15 ist eine Dosiereinrichtung 26 und in der Ansaugleitung zwischen dem Ventilator 14 und dem Ansaugstutzen 10 ein Messstutzen 27 und ein Absperrventil 23 vorgesehen. Im Ausblasrohr 16 ist eine Reingasmessvorrichtung 28 und zwischen dem Ausblasstutzen 11 und dem Ausblasrohr 16 sind ein Absperrventil 24, ein Messstutzen 29 mit einem Druckmanometer 30 und eine Drosselklappe 31 angeordnet. Zwischen dem Luftfilter 18 und der Vakuumpumpe 17 befindet sich eine Vakuumregulierung 22. Die ganze Einrichtung wird von einem Grundrahmen 4 getragen.

Obige Einrichtung ist vorgesehen für zwei Arbeitsphasen, eine Reinigungsphase (Adsorption oder Absorption) und eine Regenerierungsphase (Desorption). In der Reinigungsphase wird Industrieabluft durch das Ansaugrohr 15 und den Ansaugstutzen 10 in den Aufnahmeturm 1 geleitet und mit Hilfe des Ventilators 14 durch das Aufnahmemittel 5 gedrückt, welches Substanzen niedriger Polarität bevorzugt aufnimmt. Der Industrieabluft werden dabei die in ihr enthaltenen Lösungsmittelgase entzogen und praktisch völlig reine Abluft verlässt über den Ausblasstutzen 11 den Aufnahmeturm 1 und gelangt über das Ausblasrohr 16 und den Kamin in die Atmosphäre. Diese Phase dauert so lange, bis das Aufnahmemittel 5 mit Lösungsmittel gesättigt ist. Sobald die Reingasmessung im Ausblasrohr 16 entsprechend eingestellte Werte erreicht, wird die Einrichtung automatisch auf die Regenerierungsphase umgestellt. Die Absperrventile 23 und 24 schliessen sich und die Vakuumpumpe 17 und der Mikrowellengenerator 13 schalten ein. In dieser Regenerierungsphase erzeugt die Vakuumpumpe 17 im geschlossenen Verdampferbehälter 3 und durch eine Druckausgleichseinrichtung zwischen dem Verdampfergehäuse 2 und dem Verdampferbehälter 3 auch im Verdampfergehäuse 2 ein Vakuum. Einerseits verdampfen dadurch bei niedriger Temperatur aus dem Aufnahmemittel 5 die aufgenommenen Lösungsmittel, und anderseits entsteht um den Verdampferbehälter 3 automatisch eine für die Verdampfung der Lösungsmittel vorteilhafte Isolationsschicht. Die Druckausgleichseinrichtung zwischen dem Verdampfergehäuse 2 und dem Verdampferbehälter 3 kann eine die gewünschte Richtung des Lösungsmitteldampfstromes nicht beeinflussende Undichtheit im Verdampferbehälter 3 sein. Das Vakuum zwischen dem Verdampfergehäuse 2 und dem Verdampferbehälter 3 gestattet zusätzlich ein gleichmässiges Verteilen der Mikrowellen, welche auch die letzten Restmengen Lösungsmittel aus dem Aufnahmemittel 5 zum Verdampfen bringen. Der Lösungsmitteldampf gelangt in der Gegenrichtung zur Industrieabluft in der Reinigungsphase durch den Ansaugstutzen 10 und wegen der geschlossenen Absperrventile 23, 24 durch einen Verteiler 25, das Luftfilter 18 und die Vakuumpumpe 17 in den Kondensator 19, wo sie an den Wandungen und an der Kühlwasserleitung 21 kondensieren und als wieder verwendbares Lösungsmittel in den Kondensat-Auffangbehälter 20 fliessen. Sobald das aufgenommene Lösungsmittel aus dem Aufnahmemittel 5 verdampft und im Kondensator zurückgewonnen ist, kann die Einrichtung von der Regenerierungsphase wieder in die Reinigungsphase umgeschaltet werden.

Damit in einem endlosen, ununterbrochenen Betrieb gearbeitet werden kann, sind zwei gleiche, entsprechend parallelgeschaltete Aufnahmetürme 1 mit je mindestens einem Mikrowellengenerator 13 nötig. Während ein Aufnahmeturm 1 in der Reinigungsphase arbeitet und von der Industrieabluft die Lösungsmittel aufnimmt, wird dem anderen Aufnahmeturm in der Regenerierungsphase das aufgenommene Lösungsmittel durch Zuschaltung der Vakuumverdampfungseinrichtung durch Verdampfen wieder entzogen und als Kondensat zur Wiederverwendung aufgefangen. Die jeweilige Umschaltung von einer Phase in die andere erfolgt automatisch durch entsprechende Kontrolleinrichtungen und Steuerventile.

In der Beschreibung und auf der Figur ist der Mikrowellengenerator 13 auf dem Deckel 2.1 des Verdampfergehäuses 2 aufgebaut. Es ist ohne weiteres möglich, diesen Mikeowellengenerator 13 an irgendeiner anderen Stelle des Verdampfergehäuses 2 anzuordnen.

Es wäre ohne weiteres denkbar, in der Regenerierungsphase die Desorption des Aufnahmemittels 5 so durchzuführen, dass die Vakuumpumpe 17 gleichzeitig am Ansaugstutzen 10 und am Ausblasstutzen 11 angesetzt würde, wobei als Druckausgleichseinrichtung ein in der Mitte des Verdampferbehälters 3 angeordnetes Druckausgleichsventil 32 nötig wäre.

## Patentansprüche

1. Einrichtung zum fortlaufenden Reinigen von lösungsmittelhaltiger Abluft mit einem regenerierbaren Adsorptionsmittel (5) und zum Abgeben von Reinluft an die Atmosphäre, zum Regenerieren des Adsorptionsmittels (5) und zum Rückgewinnen des Lösungsmittels mit zwei parallelgeschalteten, das Adsorptionsmittel (5) enthaltenden Aufnahmetürmen (1), mit je mindestens einem Mikrowellengenerator (13), mit einer, beiden Aufnahmetürmen (1) gemeinsam gehörenden Vakuumverdampfungseinrichtung, welche aus nacheinandergeschalteter Vakuumpumpe (17) und Kondensator (19) besteht,
**dadurch gekennzeichnet,**
dass in jedem Aufnahmeturm (1) ein allseitig von den Wandungen des Aufnahmeturmes (1) distanzierter, ein Adsorptionsmittel (5) für eine bevorzugte Adsorption von Lösungsmitteln niedriger Polarität fassender, eine Druckausgleichseinrichtung, einen Ansaugstutzen (10) und einen Ausblasstutzen (11) aufweisender, geschlossener, mikrowellenneutraler Verdampferbehälter (3), welcher an der Vakuumverdampfungseinrichtung angeschlossen ist, angeordnet ist.

2. Einrichtung nach Anspruch 1,
**dadurch gekennzeichnet,**
dass der Verdampferbehälter (3) einen oberen und einen unteren Freiraum (3.3, 3.4) und einen unteren und einen oberen aufschraubbaren Deckel (3.1, 3.2) aufweist.

3. Einrichtung nach einem der Ansprüche 1 oder 2,
**dadurch gekennzeichnet,**
dass die Druckausgleichseinrichtung eine zwischen dem Verdampferbehälter (3) und einem Deckel (3.1, 3.2) vorgesehene Undichtheit ist.

4. Einrichtung nach einem der Ansprüche 1 oder 2,
**dadurch gekennzeichnet,**
dass die Druckausgleichseinrichtung ein in der Mitte des Verdampferbehälters (3) angeordnetes Druckausgleichsventil (32) ist.

5. Einrichtung nach Anspruch 1,
**dadurch gekennzeichnet,**
dass zwischen dem Niveau (5.1) des Adsorptionsmittels und dem Anschluss des Ansaugstutzens (10) am Verdampferbehälter (3) ein Prallblech (9) angeordnet ist.

6. Einrichtung nach Anspruch 1,
**dadurch gekennzeichnet,**
dass am Verdampfergehäuse (2) und am Deckel (2.1) je eine den Ausblasstutzen (11) bzw. den Ansaugstutzen (10) dichtend abschliessende Stutzendichtung (2.3, 2.4) angeordnet ist.

## Claims

1. Equipment for the continuous cleaning of spent air, which contains a solvent, by a regenerating adsorption agent (5) and for the delivery of the clean air into the atmosphere, for the regeneration of the adsorption agent (5) and for the recovery of the solvent, comprising two parallelly-connected adsorption towers containing the adsorption agent (5) and each with at least one microwave generator (13), and a vacuum evaporator equipment which belongs to the two adsorption towers (1) in common and which consists of a vacuum pump (17) and condenser (19) connected in series,
characterised thereby that
arranged in each adsorption tower (1) at an all-round spacing from the walls of the adsorption tower (1) is a closed evaporator container (3), which is inert to microwaves, is connected to the vacuum evaporator equipment, accommodates an adsorption agent (5) for a preferential adsorption of solvent of lower polarity and has a pressure equalising device, an induction stub pipe (10) and an exhaust stub pipe (11).

2. Equipment according to claim 1,
characterised thereby that
the evaporator container (3) has an upper and a lower free space (3.3, 3.4) and a lower and an upper lid (3.1, 3.2) which is screwable on.

3. Equipment according to one of claims 1 or 2,

characterised thereby that

the pressure equalising device is a leakage provided between the evaporation container (3) and one lid (3.1, 3.2).

4. Equiment according to one of claims 1 or 2,

characterised thereby that

the pressure equalising device is a pressure equalising valve (32) arranged in the middle of the evaporation container (3).

5. Equipment according to claim 1,

characterised thereby that

a baffle plate (9) is arranged between the level (5.1) of the adsoprtion agent and the connection of the induction stub pipe (10) to the evaporator container (3).

6. Equipment according to claim 1,

characterised thereby that

arranged at the evaporator housing (2) and at the lid (2.1) is a respective stub pipe seal (2.3, 2.4) tightly sealing off the exhaust stub pipe (11) or the induction stub pipe (10).


**Revendications**

1. Dispositif pour purifier de façon continue de l'air d'évacuation contenant un solvant, à l'aide d'un agent d'adsorption (5) apte à être régénéré, pour dégager de l'air pur dans l'atmosphère, pour régénérer l'agent d'adsorption (5) et pour récupérer le solvant, comportant deux tours de réception (1) montées en parallèle et contenant l'agent d'adsorption (5), un ou plusieurs générateurs de micro-ondes respectifs (13), un dispositif évaporateur au vide appartenant en commun aux deux tours de réception (1) et formé d'une pompe à vide (17) et d'un condensateur (19) montés successivement,

caractérisé en ce

qu'il est prévu dans chaque tour de réception (1), relié au dispositif évaporateur au vide, un récipient d'évaporation (3) fermé, neutre par rapport aux micro-ondes, dont tous les côtés sont à une certaine distance des parois de la tour de réception (1), qui contient un agent d'adsorption (5) en vue d'une adsorption préférée de solvants de faible polarité et qui possède un dispositif de compensation de pression, une tubulure d'aspiration (10) et une tubulure d'évacuation (11).

2. Dispositif selon la revendication 1,

caractérisé en ce que

le récipient d'évaporation (3) possède des espaces libres supérieur et inférieur (3.3, 3.4) et des couvercles inférieur et supérieur (3.1, 3.2) aptes à être vissés.

3. Dispositif selon l'une des revendications 1 ou 2,

caractérisé en ce que

le dispositif de compensation de pression consiste en une fente prévue entre le récipient d'évaporation (3) et un couvercle (3.1, 3.2).

4. Dispositif selon l'une des revendications 1 ou 2,

caractérisé en ce que

le dispositif de compensation de pression consiste en une soupape de compensation de pression (32) disposée au milieu du récipient d'évaporation (3).

5. Dispositif selon la revendication 1,

caractérisé en ce

qu'il est prévu, entre le niveau (5.1) de l'agent d'adsorption et le raccordement de la tubulure d'aspiration (10), au ni veau du récipient d'évaporation (3), une chicane (9).

6. Dispositif selon la revendication 1,

caractérisé en ce

qu'il est prévu, au niveau du carter d'évaporation (2) et du couvercle (2.1), des joints d'étanchéité de tubulure (2.3, 2.4) qui ferment de façon étanche les tubulures d'évacuation (11) et d'aspiration (10), respectivement.